## Europäisches Patentamt

## European Patent Office

## Office européen des brevets

(11) Veröffentlichungsnummer: **0 207 183**
**B1**

# EUROPÄISCHE PATENTSCHRIFT

(45) Veröffentlichungstag der Patentschrift:
31.08.88

(51) Int. Cl.⁴: **B 60 N 1/06**

(21) Anmeldenummer: **85108181.0**

(22) Anmeldetag: **02.07.85**

(54) Gelenkbeschlag für Sitze mit verstellbarer Rückenlehne, insbesondere für Kraftfahrzeugsitze.

(43) Veröffentlichungstag der Anmeldung:
**07.01.87 Patentblatt 87/2**

(45) Bekanntmachung des Hinweises auf die Patenterteilung:
**31.08.88 Patentblatt 88/35**

(84) Benannte Vertragsstaaten:
**DE FR IT**

(56) Entgegenhaltungen:
**EP-A-0 048 294
DE-A-2 757 907
DE-B-1 242 948
FR-A-2 303 202
FR-A-2 398 638
FR-A-2 444 427
US-A-4 025 109**

(73) Patentinhaber: **KEIPER RECARO GmbH & Co.,
Büchelstrasse 54- 58, D-5630 Remscheid 14 (DE)**

(72) Erfinder: **Walk, Hansjörg, Richard- Wagner-
Strasse 34, D-7410 Reutlingen (DE)**
Erfinder: **Wagener, Heinz- Jürgen, Engelsberg 24,
D-5630 Remscheid (DE)**

(74) Vertreter: **Buse, Karl Georg, Dipl.- Phys.,
Patentanwälte Dipl.- Phys. Buse Dipl.- Phys.
Mentzel Dipl.- Ing. Ludewig Unterdörnen 114,
D-5600 Wuppertal 2 (DE)**

## Beschreibung

Die Erfindung bezieht sich auf einen Gelenkbeschlag für Sitze mit verstellbarer Rückenlehne, insbesondere für Kraftfahrzeugsitze, bei denen ein an einem Sitzteil angeordneter, fester Gelenkteil und ein einer Lehne zugeordneter, schwenkbarer Gelenkteil über eine Schwenkachse unter Zwischenschaltung einer als Getriebe ausgebildeten Ver- und Feststelleinrichtung miteinander verbunden sind, die ein auf der Schwenkachse angeordnetes und zusammen mit dieser über einen unrunden, wenigstens zwei einander gegenüberliegend angeordnete Mitnehmerflächen aufweisenden Mitnehmerbereich drehbares, ein Getrieberad lagerndes Exzenterglied aufweist, das über ein den Mitnehmerbereich der Schwenkachse und das Exzenterglied beaufschlagendes, als eigenständiges Bauteil ausgebildetes Stützglied in Richtung der Exzentrizität radial anstellbar ist.

Bei einem aus der DE-A-27 57 907 bekannten Gelenkbeschlag der eingangs genannten Art ist das Exzenterglied einer Ausführungsform als zwei parallele Mitnehmerflächen des Mitnehmerbereiches der Schwenkachse übergreifendes, einen C-förmigen Querschnitt aufweisendes Exzenterglied ausgebildet ist, wobei zwischen dem Mitnehmerbereich der Schwenkachse und dem Exzenterglied ein in Richtung der Exzentrizität federndes Stützglied angeordnet ist. Dadurch wird das auf dem Exzenterglied gelagerte Getrieberad in Richtung der Exzentrizität in seiner Zahneingriffsstelle unter Spannung gehalten, so daß das sich im wesentlichen aus dem Zahnflankenspiel und dem Lagerspiel zusammensetzende Radialspiel sowohl in der Bewegungsphase als auch bei Stillstand des Gelenkbeschlages eliminiert ist. Um jedoch das Radialspiel insbesondere während der Stillstandsphase sicher zu eliminieren, ist eine bestimmte Vorspannung des Stützgliedes erforderlich. Diese, immer vorhandene, bestimmte Vorspannkraft steht einer leichtgängigen Bedienung des Gelenkbeschlages entgegen.

Aufgabe der vorliegenden Erfindung ist es, einen Gelenkbeschlag der eingangs genannten Art unter Beibehaltung der Spielfreiheit derart zu verbessern, daß optimale Betriebszustände möglich sind.

Diese Aufgabe ist erfindungsgemäß dadurch gelöst, daß zwischen das Exzenterglied und das Getrieberad ein Lagerring geschaltet ist, der über ein in Exzenterebene und in Längsrichtung der Schwenkachse gelagertes Druckglied in radialer Richtung anstellbar abgestützt ist. Somit werden die Funktionen des Exzenterbolzens, nämlich ein spielfreies Ineinanderdrücken der Verzahnung bei der Verstellbewegung und eine spielfreie Sperrung des Gelenkbeschlages im Stillstand von getrennten Bauteilen übernommen, weil der Exzenterbolzen in einen Sperrbereich und einen federnd nachgiebigen Stützbereich aufgeteilt ist.

Dabei mag das Druckglied aus einem an der Schwenkachse in Längsrichtung dieser Schwenkachse schwenkbar gelagerter Hebel ausgebildet sein. Es ist jedoch auch denkbar statt dessen das Druckglied als auf der Schwenkachse längsverschiebbar gelagerte Druckscheibe auszubilden.

Um eine leichtgängige Verstellung erzielen zu können, ist der Lagerring vorteilhaft aus dem Außenring eines das Exzenterglied umfassenden Wälzlagers gebildet, wobei der Lagerring fest in das Getrieberad der Ver- und Feststelleinrichtung eingesetzt ist. Wenn der feste Gelenkteil in der Ebene des Exzentergliedes gelagert ist, laufen die zentrischen Abschnitte exzentrisch um die Exzentermitte, wenn die Schwenkachse gedreht wird. Dabei erfolgt durch das Stützglied eine radiale Verlagerung des Innenzahnkranzes derart, daß die Verzahnung ständig spielfrei ineinandergedrückt wird. Die dazu notwendige Kraft wird durch das federnd nachgebende Stützglied aufgebracht, wobei das Lager während des Verstellvorganges die gesamten Radialkräfte aufnimmt. Der den Lagerring bildende Außenring des Wälzlagers mag dabei zur festen Verbindung mit dem Getrieberad in dieses eingepreßt sein, während der Innenring des Wälzlagers mit dem Exzenterglied drehfest verbunden sein kann.

Um das Exzentermaß in radialer Richtung in bezug auf die sich beim umlaufenden Zahneingriff bemerkbar machenden Toleranzen anpassen zu können, weist der Außen-Lagerring einen über den Innenring des Wälzlagers seitlich vorragenden Innenkegelmantel auf, an dem das Druckglied in Anlage gehalten ist. Statt einer derartigen Ausführungsform des Außenlagerringes mit einem Innenkegelmantel könnte der Außenlagerring an seinem Innenumfang auch zylindrisch gestaltet sein, während das Druckglied in Schwenkrichtung einen spiralförmig ansteigenden Außenumfangsbereich aufweisen könnte. Vorteilhaft wäre es in beiden Fällen, wenn der das Druckglied bildende Hebel als einen angeflachten Abschnitt der Schwenkachse übergreifenden Gabelhebel ausgebildet ist, der mit einer zum Exzenterglied hin geneigten Andruckfläche in Anlage am Innenkegelmantel des Außen-Lagerringes bringbar ist. Dabei mag die Andruckfläche des Druckgliedes vorteilhaft in Umfangsrichtung des Innenkegelmantels des Lagerringes gerundet und in Schwenkrichtung ballig ausgebildet sein. Zur Nachführung des Druckgliedes bei den infolge der Toleranzen auftretenden radialen Ausweichbewegungen ist nach einem weiteren vorteilhaften Ausgestaltungsmerkmal der Erfindung das Druckglied von einem Federglied in Richtung auf das Exzenterglied beaufschlagt. Dabei mag das Federglied vorzugsweise von einer Blattfeder gebildet sein, die von der das Druckglied lagernden Achse gehaltert sein kann.

Dieses auf der Schwenkachse in deren axialer Richtung schwenkbar gelagerte Druckglied rotiert mit der Schwenkachse mit, wenn diese zur Verstellung des Gelenkbeschlages gedreht wird. Durch die mittels einer schwachen Feder nachführende Beaufschlagung des Druckgliedes legt sich diese in jedem Fall an die innere Mantelfläche des Außen-Lagerringes an. Dabei mag die Konizität des Innen-Kegelmantels bzw. die spiralförmige Steigung am Außenumfang des Druckgliedes so ausgelegt sein, daß bei stillstehender Schwenkachse die Haftreibung zwischen dem Druckglied und dem Lagerring Selbsthemmung ergibt. Dadurch wird die Verzahnung daran gehindert auszurücken, so daß das Getriebe spielfrei ist. Bei drehender Schwenkachse und sich zwischen dem Innenmantel des Lagerringes und dem Druckglied einstellender Gleitreibung kann sich das Druckglied durch ausweichen den Exzentrizitätsunterschieden anpassen. Infolge der vernachlässigbar kleinen Reibmomente des Druckgliedes bei der Drehbewegung mit der Schwenkachse ist kein Anstieg des Betätigungsmomentes in bewegbaren Größen zu erwarten.

Die Erfindung ist in Ausführungsbeispielen auf der Zeichnung dargestellt und wird Nachfolgend näher erläutert.

Es zeigen:

Fig. 1 den erfindungsgemäßen Gelenkbeschlag zur Verwendung zwischen dem Sitzteil und der Rückenlehne eines Fahrzeugsitzes in einem Längsschnitt,

Fig. 2 den aus Fig. 1 ersichtlichen Gelenkbeschlag in einer Seitenansicht im Schnitt nach der Linie II-II von Fig. 1,

Fig. 3 den aus Fig. 1 ersichtlichen Gelenkbeschlag, ebenfalls in einer Seitenansicht, jedoch in einem Schnitt nach der Linie III-III von Fig. 1,

Fig. 4 ein weiteres Ausführungsbeispiel eines Gelenkbeschlages in einem der Fig. 1 analogen Längsschnitt,

Fig. 5 ein anderes Ausführungsbeispiel des erfindungsgemäßen Gelenkbeschlages, ebenfalls in einem Längsschnitt, in den Fig. 1 und 4 analoger Darstellung.

Die Ausführungsbeispiele der dargestellten Gelenkbeschläge weisen jeweils einen dem Sitzteil eines Kraftfahrzeugsitzes zugeordneten, festen Gelenkteil 10 und einen an der Rückenlehne zu befestigenden, schwenkbaren Gelenkteil 11 auf. Diese Gelenkteile 10 und 11 sind über eine Schwenkachse 12 drehgelenkig miteinander verbunden. Diese Schwenkachse weist außer einem mit beispielsweise Anflachungen versehenen Mitnehmerabschnitt 13 zwei zentrische Abschnitte 14 und 15 auf, zwischen denen einerseits ein durch Anflachungen gebildete Mitnehmerflächen 17 und 18 aufweisender Mitnehmerbereich 16 angeordnet ist, an den sich andererseits ein zum zentrischen Abschnitt 15 hinweisender Lagerbereich 19 zur Aufnahme eines, später noch zu erläuternden, Druckgliedes 20 anschließt.

Der Mitnehmerbereich 16 ist von einer im Querschnitt C-förmigen Exzenterscheibe 21 umgriffen, die eine rechteckförmige Ausnehmung aufweist, deren Seitenwangen an den Mitnehmerflächen 17 und 18 der Schwenkachse 12 schließend anliegen. In den Boden der Ausnehmung der Exzenterscheibe 21 ist ein Aufnahmeraum 22 für ein elastisches Stützglied 23 eingelassen. Dieses elastische Stützglied veranlaßt eine Ausweichbewegung der Exzenterscheibe 21 in Richtung zur größtmöglichen Exzentrizität hin.

Die Exzenterscheibe 21 ist bei allen dargestellten Ausführungsbeispielen vom Innenring 25 eines Wälzlagers 24 umfaßt, dessen Außenlagerring 26 einen seitlich über den Lagerbereich 19 ragenden Innenkegelmantel 27 aufweist. Der Lagerring 26 nimmt an seinem Außenumfang ein Stirnrad 28 drehfest auf, wobei diese drehfeste Verbindung beispielsweise durch einen Preßsitz erzeugt werden kann.

Es versteht sich jedoch auch, daß abweichend von der vorbeschriebenen Wälzlagerung des Stirnrades 28 dieses einen zentrisch zu seiner Verzahnung angeordneten Lagerring aufweisen kann, der unmittelbar unter Bildung eines Gleitlagers auf einer im Durchmesser entsprechend vergrößerten Exzenterscheibe 21 gelagert sein könnte. Die Verwendung eines Wälzlagers 24 ist jedoch im Hinblick auf eine leichtgängige Verstellbarkeit des Gelenkbeschlages vorteilhafter.

Das Stirnrad 28 ist bei allen dargestellten Ausführungsbeispielen Bestandteil des Gelenkteiles 10, wobei das Stirnrad in bekannter Weise aus einer Ausdrückung des Gelenkteiles 10 gebildet sein kann. Die Außenverzahnung 29 des durch eine Ausdrückung des Gelenkteiles 10 gebildeten Stirnrades 28 greift in eine Innenverzahnung 30 des mit der Rückenlehne verbindbaren, schwenkbaren Gelenkteiles 11 ein, dessen die Innenverzahnung 30 überbrückende Stützscheibe 31 auf dem zentrischen Abschnitt 14 der Schwenkachse 12 gelagert ist. Mit diesem schwenkbaren Gelenkteil 11 ist ein Lagerschild 46 fest verbunden, der einerseits auf dem zentrischen Abschnitt 15 der Schwenkachse 12, gegebenenfalls unter Zwischenschaltung einer Lagerbuchse, abgestützt ist und andererseits der axial unverrückbaren Halterung des das Stirnrad 28 aufweisenden Gelenkteiles 10 am Gelenkteil 11 dient. Die Zähnezahl der Außenverzahnung 29 des Stirnrades 28 ist um wenigstens einen Zahn geringer als die Zähnezahl der Innenverzahnung 30 des Gelenkteiles 11. Dabei ist der Kopfkreisdurchmesser des Stirnrades 28 um wenigstens eine Zahnhöhe kleiner als der Fußkreisdurchmesser der Innenverzahnung 30. Die Exzentrizität der Exzenterscheibe 21 gegenüber den zylindrischen Abschnitten 14 und 15 der Schwenkachse soll etwa der Differenz zwischen dem Fußkreisradius der Innenverzahnung 30 und dem Kopfkreisradius des Stirnrades 28 entsprechen. Durch die Zwischenschaltung eines elastischen Stützgliedes 23 zwischen die Exzenterscheibe 21 und die Schwenkachse 12 läßt sich die Exzentrizität in der Elastizität entsprechenden Grenzen nach oben oder unten verändern.

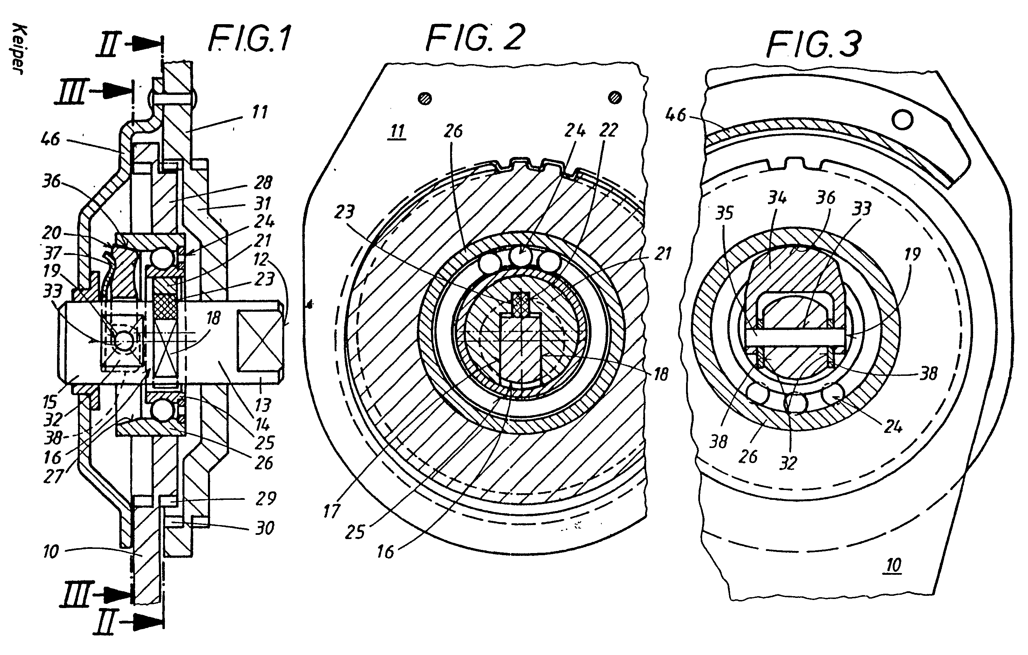

Der Lagerbereich 19 für das Druckglied 20 ist aus zwei einander gegenüberliegenden Anflachungen 32 der Schwenkachse und einer diese durchquerenden Lagerbohrung 33 gebildet. Das Druckglied 20 ist, wie insbesondere aus Fig. 3 entnommen werden kann, als Gabelhebel 34 ausgebildet, der die Anflachungen 32 der Schwenkachse 12 übergreifend auf einer die Bohrung 33 durchquerenden Lagerachse 35 schwenkbar abgestützt ist. An seinem von der Lagerachse 35 entfernten Ende weist dieser Gabelhebel oberseitig eine zur Exzenterscheibe 21 hin geneigte Andruckfläche 36 auf, die in Anlage am Innenkegelmantel 27 des Außenlagerringes 26 ist. In dieser mehr oder weniger ein-bzw. ausgeschwenkten Anlagestellung wird der Gabelhebel 34 durch eine Blattfeder 37 gehalten, die mit Winkelschenkeln 38 die Anflachungen 32 der Schwenkachse 12 zwischen den Schwenkeln des Gabelhebels 34 übergreifend von der Lagerachse 35 gehalten wird. Dabei stützt sich der Gabelrücken an der rückwärtigen Seitenwandung der Anflachungen 32 ab, so daß über die Blattfeder 37 der das Druckglied 20 bildende Gabelhebel 34 ständig in Richtung auf den Innenkegelmantel 27 des Außenlagerringes 26 druckbeaufschlagt ist.

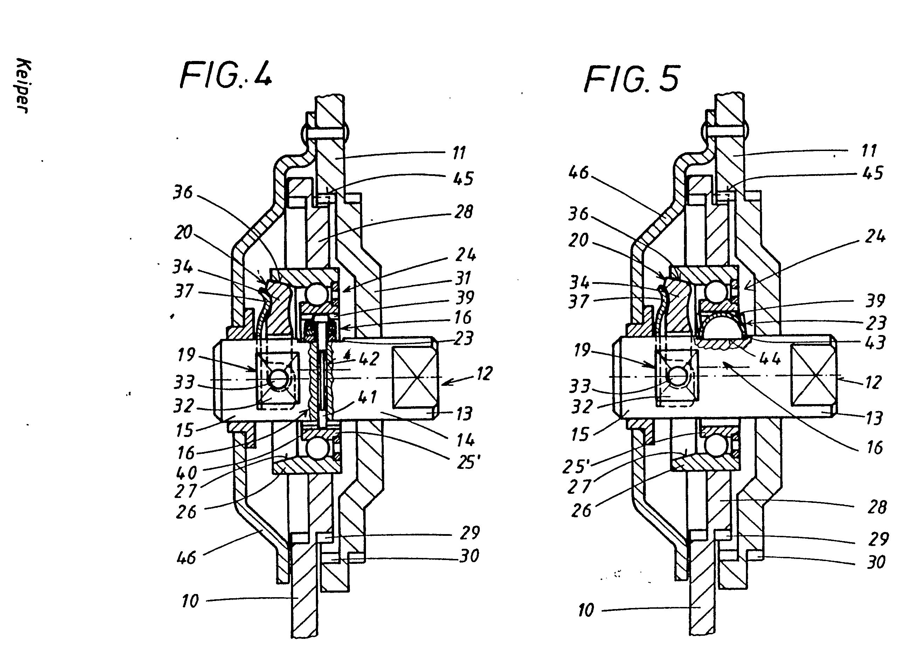

Die aus den Fig. 4 und 5 ersichtlichen Ausführungsbeispiele unterscheiden sich gegenüber dem aus den Fig. 1 bis 3 ersichtlichen Ausführungsbeispiel insbesondere durch die unterschiedliche Ausbildung des das Exzenterglied bildenden Mitnehmerbereiches 16, während der übrige Aufbau analog dem, insbesondere aus den Fig. 1 und 3 ersichtlichen Aufbau ist. Bei der aus Fig. 4 ersichtlichen Ausführungsform ist der Innenring 25' des Wälzlagers 24 auf der Schwenkachse 12 in deren Mitnehmerbereich 16 exzentrisch angeordnet, indem im Innenring 25' an zwei diametral gegenüberliegenden Stellen jeweils eine Nut 39 und 40 vorhanden ist, in welche die Enden eines die Schwenkachse im Mitnehmerbereich 16 durchquerenden Stiftes 41 schließend eingepaßt sind. Dieser Stift 41 ist verschiebbar in der Bohrung 42 der Schwenkachse 12 angeordnet und weist oberseitig einen im Grund der Nut 39 anliegenden Kopf auf, wobei zwischen diesem Kopf und einer Anlagefläche 44 im Mitnehmerbereich der Schwenkachse 12 ein oder mehrere elastisch nachgiebige Stützglieder 23 angeordnet sind.

Bei dem aus Fig. 5 ersichtlichen Ausführungsbeispiel ist der Mitnehmerbereich zur exzentrischen Anordnung des Innenringes 25' des Wälzlagers 24 durch ein Bügelfederglied 43 gebildet, welches in einer Anflachung 44 der Schwenkachse 12 unverschiebbar abgestützt ist und seinerseits in die Nut 39 im Innenlagerring 25' des Wälzlagers 24 eingreift. Diese Abstützung des Stirnrades 28 an der Schwenkachse 12 erfolgt, wie bei diesem Ausführungsbeispiel ganz deutlich sichtbar ist, einerseits über das von dem Bügelfederglied 43 gebildete Stützglied 23 und andererseits über die Abstützung in der Zahneingriffsstelle, wobei die Reaktionskräfte über die Lagerstellen der Stützscheibe 31 und das Lagerschild 46 auf die Schwenkachse 12 übertragen werden.

Bei der Einleitung einer Drehbewegung in die Schwenkachse 12 des erfindungsgemäßen Gelenkbeschlages erfolgt über den Mitnehmerbereich 16 der Schwenkachse auch eine Drehmitnahme des exzentrisch aufgesetzten Innenringes 25 bzw. 25' des Wälzlagers 24. Dadurch wird auch die jeweilige Eingriffsstelle 45 entsprechend der Drehbewegung der Schwenkachse 12 mit umlaufen. Bei dieser Drehbewegung werden Radialkräfte wirksam, die aus dem durch Fertigungstoleranzen unvermeidbaren Radialschlag in den Verzahnungen 29 und 30 entstehen. Dabei wandert die Innenverzahnung 30 gegen die Kraft des elastischen Stützgliedes 23 entweder radial nach innen oder aber in durch die Fertigungstoleranzen gegebenen Grenzen mit der Kraftwirkung des Stützgliedes nach außen. Dabei wird durch das federnde Stützglied 23 die Innenverzahnung 30 über die radial ausweichbaren zentrischen Abschnitte 14 und 15 an der Eingriffsstelle der Lage der Außenverzahnung 29 nachgeführt. Bei einer Radialbewegung der Schwenkachse nach unten schwenkt dann das als Gabelhebel 34 ausgebildete federbeaufschlagte Druckglied 20 nach innen auf den Mitnehmerbereich 16 zu, während bei einer Radialbewegung der Schwenkachse 12 nach oben das Druckglied 20 gegen die Kraft der Blattfeder 37 nach außen schwenkt. In dieser Bewegungsphase herrscht zwischen dem Innenkegelmantel 27 des Außenlagerringes 26 und der Andruckfläche 36 am Druckglied 20 Gleitreibung. Sobald nun die Stellbewegung an der Schwenkachse 12 unterbrochen wird, bleibt die momentane Einstellung der Verzahnungen 29 und 30 in der Eingriffsstelle 45 erhalten, da diese Lage durch das Druckglied 20 gestützt wird, wobei nunmehr zwischen der Andruckfläche 36 des Druckgliedes und dem Innenkegelmantel 27 des Außenlagerringes 26 Haftreibung besteht. Wenn nun die Neigungswinkel des Innenkegelmantels 27 einerseits und der Andruckfläche 36 andererseits im Selbsthemmungsbereich liegen, so bleibt die momentan erreichte Lage der Verzahnungen an der Eingriffsstelle spielfrei aufrechterhalten.

**Bezugszeichenliste:**

10 Gelenkteil, fest
11 Gelenkteil, schwenkbar
12 Schwenkachse
13 Mitnehmerabschnitt

14 Abschnitt, zentrisch
15 Abschnitt, zentrisch
16 Mitnehmerbereich
17 Mitnehmerfläche
18 Mitnehmerfläche
19 Lagerbereich
20 Druckglied
21 Exzenterglied/Exzenterscheibe
22 Aufnahmeraum
23 Stützglied
24 Wälzlager
25 Innenring
25 Innenring
26 Außenlagering
27 Innenkegelmantel
28 Stirnrad
29 Außenverzahnung
30 Innenverzahnung
31 Stützscheibe
32 Anflachung
33 Lagerbohrung
34 Gabelhebel
35 Lagerachse, für 34
36 Andruckfläche, an 34
37 Blattfeder
38 Winkelschenkel
39 Nut in 25'
40 Nut in 25'
41 Stift
42 Bohrung
43 Bügelfederglied
44 Anflachung
45 Zahneingriffsstelle
46 Lagerschild

**Patentansprüche**

1. Gelenkbeschlag für Sitze mit verstellbarer Rückenlehne, insbesondere für Kraftfahrzeugsitze, bei denen ein an einem Sitzteil angeordneter, fester Gelenkteil (10) und ein einer Lehne zugeordneter, schwenkbarer Gelenkteil (11) über eine Schwenkachse unter Zwischenschaltung einer als Getriebe ausgebildeten Ver- und Feststelleinrichtung miteinander verbunden sind, die ein auf der Schwenkachse (12) angeordnetes und zusammen mit dieser über einen unrunden Mitnehmerflächen (17, 18) aufweisenden Mitnehmerbereich (16) drehbares, ein Getrieberad (28) lagerndes Exzenterglied (21) aufweist, das über ein den Mitnehmerbereich der Schwenkachse und das Exzenterglied beaufschlagendes, als eigenständiges Bauteil ausgebildetes Stützglied (23) in Richtung der Exzentrizität radial anstellbar ist, dadurch gekennzeichnet, daß zwischen das Exzenterglied (21) und das Getrieberad (28) ein Lagerring (26) geschaltet ist, der über ein in Exzenterebene und in Längsrichtung der Schwenkachse (12) gelagertes Druckglied (20) in radialer Richtung anstellbar abgestützt ist.

2. Gelenkbeschlag nach Anspruch 1, dadurch gekennzeichnet, daß das Druckglied (20) aus einem an der Schwenkachse (12) in Längsrichtung der Schwenkachse (12) schwenkbar gelagerten Hebel (34) gebildet ist.

3. Gelenkbeschlag nach Anspruch 1, dadurch gekennzeichnet, daß das Druckglied (20) als auf der Schwenkachse (12) längsverschiebbar gelagerte Druckschiebe ausgebildet ist.

4. Gelenkbeschlag nach einem oder mehreren der vorhergehenden Ansprüche, dadurch gekennzeichnet, daß der Lagerring (26) aus dem Außenring eines das Exzenterglied (21) umfassenden Wälzlagers (24) gebildet ist, wobei der Lagerring (26) fest in das Getrieberad (28) der Ver- und Feststelleinrichtung eingesetzt ist.

5. Gelenkbeschlag nach Anspruch 4, dadurch gekennzeichnet, daß der Außen-Lagerring (26) einen über den Innenring (25) des Wälzlagers (24) seitlich vorragenden Innenkegelmantel (27) aufweist, an dem das Druckglied (20) in Anlage gehalten ist.

6. Gelenkbeschlag nach Anspruch 2, dadurch gekennzeichnet, daß der ein Druckglied (20) bildender Hebel als einen angeflachten Abschnitt (19) der Schwenkachse (12) übergreifender Gabelhebel (34) ausgebildet ist, der mit einer zum Exzenterglied hin geneigten Abdruckfläche (36) in Anlage am Innenkegelmantel (37) des Außen-Lagerringes (26) bringbar ist.

7. Gelenkbeschlag nach Anspruch 6, dadurch gekennzeichnet, daß die Andruckfläche (36) des Druckgliedes (20) in Umfangsrichtung des Innenkegelmantels (27) des Lagerringes (26) gerundet und in Schwenkrichtung ballig ausgebildet ist.

8. Gelenkbeschlag nach einem oder mehreren der vorhergehenden Ansprüche, dadurch gekennzeichnet, daß das Druckglied (20) von einem Federglied (37) in Richtung auf das Exzenterglied (16, 21) beaufschlagt ist.

9. Gelenkbeschlag nach Anspruch 8, dadurch gekennzeichnet, daß das Federglied (37) von einer Blattfeder gebildet ist, die von der das Druckglied (20) lagernden Achse (35) gehaltert ist.

**Claims**

1. A hinge fitting for seats with an adjustable back rest, particularly for motor vehicle seats, in which a hinge element (10) mounted on a seat member and a pivoted hinge element (11) associated with a back rest are interconnected via a pivot axis with the interposition of an adjusting and locking arrangement designed as a gearing, which arrangement has an eccentric member (21) mounted on the pivot axis (12) with which it rotates through an out-of-round driving range (16) having driving surfaces (17, 18), and supporting a gear wheel (28), which eccentric member is radially adjustable in a direction of eccentricity via a supporting member (23) designed as an independent component part and which controls the driving range of the pivot axis and the eccentric member,

characterized in that between the eccentric member (21) and the gear wheel (28) there is connected a bearing ring (26) supported adjustably in a radial direction via a pressure member (20) mounted in the eccentric plane and in a longitudinal direction of the pivot axis (12).

2. A hinge fitting as claimed in the claim 1, characterized in

that the pressure member (20) is comprised of a lever (34) supported pivotally on the pivot axis (12) in a longitudinal direction of the pivot axis (12).

3. A hinge fitting as claimed in the claim 1, characterized in

that the pressure member (20) is designed as a pressure disk supported on the pivot axis (12) for longitudinal movement thereon.

4. A hinge fitting as claimed in any one or several of the preceding claims, characterized in

that the bearing ring (26) is comprised of the outer ring of an antifriction bearing (24) enclosing the eccentric member (21), said bearing ring (26) being fixed in place in the gear weel (28) of the adjusting and locking arrangement.

5. A hinge fitting as claimed in the claim 4, characterized in

that the outer bearing ring (26) has an inner cone-shaped surface (27) protruding laterally beyond the inner ring (25) of the antifriction bearing (24), against which the pressure member (20) is held engaged.

6. A hinge fitting as claimed in the claim 2, characterized in

that the lever constituting a pressure member (20) is designed as a forked lever (34) gripping over a flattened portion (19) of the pivot axis (12), said lever having a contact surface (36) inclined towards the eccentric member adapted to be engageable with the inner cone-shaped surface (37) of the outer bearing ring (26).

7. A hinge fitting as claimed in the claim 6, characterized in

that the contact surface (36) of the pressure member (20) is designed to be rounded in a peripheral direction of the inner cone-shaped surface (27) of the bearing ring (26) and crowned in a direction of pivot.

8. A hinge fitting as claimed in any one or several of the preceding claims, characterized in

that the pressure member (20) is controlled by a spring member (37) in a direction towards the eccentric member (16, 21).

9. A hinge fitting as claimed in the claim 8, characterized in

that the spring member (37) is comprised of a leaf spring held by the axis (35) supporting the pressure member (20).

**Revendications**

1. Ferrure d'articulation pour des sièges à dossiers réglables, notamment pour des sièges de véhicule automobile, dans lesquels une partie fixe d'articulation (10), disposée sur une partie du siège et une partie pivotante d'articulation (11), associée à un dossier, sont reliées entre elles par l'intermédiaire d'un axe de pivotement, avec interposition d'un dispositif à engrenage de manoeuvre et de blocage, qui comporte un organe excentrique (21) supportant une roue dentée (28) et qui est monté sur l'axe de pivotement (12) et peuvent tourner en même temps que celui-ci dans une zone d'entraînement (16) comportant des surfaces d'entraînement non circulaires (17, 18), ledit organe excentrique étant déplaçable radialement dans la direction de l'excentricité par l'intermédiaire d'un organe d'appui (23) qui est agencé sous la forme d'un composant indépendant et qui sollicitent la zone d'entraînement de l'axe de pivotement et l'organe excentrique, caractérisée en ce qu'une bague de roulement (26) est interposée entre l'organe excentrique (21) et la roue dentée (28) cette bague étant supportée en direction radiale avec possibilité de serrage par l'intermédiaire d'un organe de pressage (20) porté dans le plan de l'excentrique et dans la direction longitudinale de l'axe de pivotement (12).

2. Ferrure d'articulation selon la revendication 1, caractérisée en ce que l'organe de pressage (20) est constitué par un levier (34) monté de façon à pouvoir pivoter sur l'axe de pivotement (12) dans la direction longitudinale de cet axe.

3. Ferrure d'articulation selon la revendication 1, caractérisée en ce que l'organe de pressage (20) est agencé sous la forme d'un disque de pression monté avec possibilité de translation longitudinale sur l'axe de pivotement (12).

4. Ferrure d'articulation selon une ou plusieurs des revendications précédentes, caractérisée en ce que la bague de roulement (26) est constituée par la bague extérieure d'un roulement (24) entourant l'organe excentrique (21), cette bague de roulement (26) étant montée fixe dans la roue dentée (28) du dispositif de manoeuvre et de blocage.

5. Ferrure d'articulation selon la revendication 4, caractérisée en ce que la bague de roulement extérieure (26) comporte une enveloppe intérieure conique (27) faisant saillie latéralement de la bague intérieure (25) du roulement (24) et contre laquelle est maintenu appliqué l'organe de pressage (20).

6. Ferrure d'articulation selon la revendication 2, caractérisée en ce que le levier formant un organe de pressage (20) est agencé sous la forme d'un levier à fourche (34) s'accrochant sur une partie en méplat (19) de l'axe de pivotement (12) dans la ferrure et qui peut être appliqué dans la ferrure contre l'enveloppe intérieure conique (27) de la bague de roulement extérieure (26) par une surface de pressage (36) inclinée en direction de l'organe excentrique.

7. Ferrure d'articulation selon la revendication 6, caractérisée en ce que la surface de pressage (36) de l'organe de pressage (20) est arrondie dans la direction périphérique de l'enveloppe intérieure conique (27) de la bague de roulement (26) et pourvue d'un profil sphérique dans la direction de pivotement.

8. Ferrure d'articulation selon une ou plusieurs des revendications précédentes, caractérisée en ce que l'organe de pressage (20) est sollicité par un organe élastique (37) en direction de l'organe excentrique (16, 21).

9. Ferrure d'articulation selon la revendication 8, caractérisée en ce que l'organe élastique (37) est constitué par un ressort à lame qui est maintenue par l'axe (35) supportant l'organe de pressage (20).

Keiper

0 207 183

FIG. 5

FIG. 4

Keiper

3